# EUROPÄISCHE PATENTSCHRIFT

(11) **EP 2 024 618 B1**
(45) Veröffentlichungstag und Bekanntmachung des Hinweises auf die Patenterteilung: **22.06.2011**
(21) Anmeldenummer: 07723796.4
(22) Anmeldetag: 30.03.2007
(51) Int. Cl.: F02B 37/22, F01D 17/14, F04D 27/02

(54) **TURBOVERDICHTER FÜR EINE BRENNKRAFTMASCHINE**
TURBOCOMPRESSOR FOR AN INTERNAL COMBUSTION ENGINE
TURBOCOMPRESSEUR POUR UN MOTEUR À COMBUSTION INTERNE

(30) Priorität: 06.06.2006 DE 102006026166
(43) Veröffentlichungstag der Anmeldung: 18.02.2009
(73) Patentinhaber: FEV Motorentechnik GmbH, 52078 Aachen (DE)
(72) Erfinder: WITTLER, Michael, 33181 Bad Wünnenberg (DE)
(74) Vertreter: Neumann, Ernst Dieter
(86) Internationale Anmeldenummer: PCT/EP2007/002854
(87) Internationale Veröffentlichungsnummer: WO 2007/140835

(56) Entgegenhaltungen:
- WO-A-2004/009961
- DE-A1-102004 003 208
- DE-A1-102004 003 210
- DE-A1-102004 003 211
- DE-A1-102004 039 299

## Beschreibung

Die Erfindung betrifft einen Turboverdichter für eine Brennkraftmaschine, insbesondere Verdichter für einen Turbolader, mit einem Luftsammelkanal für zu verdichtende Verbrennungsluft, an den sich ein Haupteinlasskanal, zumindest ein Zusatzkanal und ein drehbar gelagertes Verdichterrad anschließen, und mit einem verstellbaren Absperrorgan zur Veränderung der Strömungsquerschnitte im Haupteinlasskanal und im Zusatzkanal.

Turbolader, insbesondere von drosselgesteuerten Ottomotoren, haben bei Teillastbetrieb aufgrund des geringen Massendurchsatzes ein niedriges Drehzahlniveau, weshalb das Ansprechverhalten oftmals bemängelt wird.

Aus der DE 102 52 767 A1 ist bekannt, den Verdichtermassenstrom zu nutzen, um die Verdichterarbeit zu reduzieren. Dabei ist in dem Haupteinlasskanal ein Absperrorgan angeordnet und ein paralleler Zusatzkanal vorgesehen, in dem vor dem Verdichterrad eine Dralleinrichtung angeschlossen ist. Bei dem bekannten Turboverdichter ist nur dem Absperrorgan eine Verstelleinrichtung zugeordnet, so dass nach vollständigem Schließen des Absperrorgans eine weitere Verstellbewegung den Strömungsquerschnitt der Dralleinrichtung beeinflusst. Diese Verstelleinrichtung ist aufwendig und kostenintensiv, da sowohl am Haupteinlasskanal ein rotationsförmiger Verstellkörper als auch eine verstellbare Innenwand für den Zusatzkanal vorgesehen sind, die leichtgängig verschiebbar sein müssen und eine Rückstelleinrichtung benötigen, um zumindest die Innenwand des Zusatzkanals zurückschieben.

Aus der DE 10 2004 003 208 A1 (nächstliegender Stand der Technik), der DE 10 2004 003 210 A1 und der DE 10 2004 003 211 A1 sind jeweils Verdichter im Ausgangstrakt einer Brennkraftmaschine bekannt, die einen Verbrennungsluftkanal aufweisen, der über einen axialen Verdichtereinlasskanal und einen in den Verdichtereinlasskanal radial einmündenden Zusatzkanal das drehbar gelagerte Verdichterrad mit Verbrennungsluft versorgen kann. Die Strömungsquerschnitte eine Axialluftöffnung vom Verbrennungsluftkanal zum axialen Verdichtereinlasskanal und einer Radialluftöffnung vom Verbrennungsluftkanal zum Zusatzkanal sind durch zwei zueinander axial entgegengesetzt verstellbare Sperrorgane einer Stelleinrichtung einstellbar.

Aus der DE 10 2004 039 299 A1 ist ein Turboverdichter für eine Brennkraftmaschine bekannt, bei dem ein axialer Verdichtereinlauf zum Verdichterrad mit einer verstellbaren Klappe steuerbar ist und eine Einlaufdralleinrichtung zum tangentialen Zuführen von Ansaugluft zum Verdichterrad mit einer drehbaren Manschette steuerbar ist.

Aufgabe der Erfindung ist es daher, den Zuströmbereich des bekannten Turboverdichters so zu verbessern, dass er mit einfachen und wenigen Bauteilen auskommt und trotzdem die gewünschte Einströmverbesserungen des Turboverdichters sicherstellt.

Diese Aufgabe wird gelöst durch einen Turboverdichter für eine Brennkraftmaschine, insbesondere Verdichter für einen Turbolader mit einem Luftsammelkanal für zu verdichtende Verbrennungsluft, an den sich ein Haupteinlasskanal, zumindest ein Zusatzkanal und ein drehbar gelagertes Verdichterrad anschließen, und mit einem verstellbaren Absperrorgan zur Veränderung der Strömungsquerschnitte im Haupteinlasskanal und im Zusatzkanal, bei welchem das Absperrorgan am Übergang vom Luftsammelkanal zum Haupteinlasskanal und zum Zusatzkanal angeordnet ist, und das Absperrorgan die Strömungsquerschnitte des Haupteinlass- und des Zusatzkanal in Strömungsrichtung gesehen am Einlaß der Kanäle steuert.

Die Erfindung betrifft daher einen Turboverdichter, bei dem das Absperrorgan am Übergang vom Luftsammelkanal zu dem Haupteinlasskanal und dem Zusatzkanal angeordnet ist und die Strömungsquerschnitte des Haupteinlasskanal und des Zusatzkanals in Strömungsrichtung am Beginn der Kanäle steuert. Vorzugsweise erfolgt die Steuerung derart, dass beginnend bei geschlossenem Haupteinlasskanal und Zusatzkanal zunächst der Zusatzkanal sukzessive geöffnet wird, so dass bei kleinen Luftmengen dem Verdichterrad über den Zusatzkanal Luft zugeführt wird und anschließend zusätzlich der Haupteinlasskanal geöffnet wird, so dass ein hinreichend großer Strömungsquerschnitt für das Verdichterrad gegeben ist, wenn entsprechend große Luftmengen gefördert werden sollen. Die Querschnittsveränderungen erfolgen in Schließrichtung des Absperrorgans in der umgekehrten Reihenfolge.

Es lässt sich also mit einem Absperrorgan, das als einfache Drosselkappe ausgebildet sein kann, sowohl der Haupteinlasskanal als auch der Zusatzkanal in seinem jeweiligen Strömungsquerschnitt steuern. Der Zusatzkanal kann von seiner Strömungsverbindung mit dem Verdichterrad einen an sich bekannte Dralleinrichtung aufweisen.

Zusätzlich zu dem Zusatzkanal können noch ein Zusatzzweitkanal und/oder weitere Zusatzkanäle vorgesehen sein, die bis zur Dralleinrichtung führen oder eine eigene Dralleinrichtung aufweisen. Dieser Zusatzzweitkanal und die weiteren Zusatzkanäle können auch unabhängig vom Absperrorgan mit dem Luftsammel- oder dem Haupteinlasskanal verbunden sein. Bevorzugt sind mehrere Zusatzkanäle einzeln von dem Absperrorgan absperrbar, wobei die Zusatzkanäle axial auf dem Umfang des das Absperrorgan umgebenden Kanals versetzte Eingänge in Form von Bohrungen zum getrennten Öffnen aufweist. Die Zusatzkanäle können einzeln bis zum Verdichterrad geführt werden, wo sie tangential das Verdichterrad anblasen oder eine Drall erzeugende Strömung vor dem Verdichterrad verursachen. Die Zusatzkanäle lassen sich auf gießtechnischem Wege kostengünstig herstellen.

Weitere Ausgestaltungen der Erfindung sind der nachfolgenden Beschreibung und den Unteransprüchen zu entnehmen.

Es zeigen:
Fig. 1 einen Längsschnitt durch einen Luftsammelkanal, einen Haupteinlasskanal, einen Zusatzkanal und das Drosselorgan,
Fig. 2 eine Abwicklung eines um das Drosselorgan angeordneten ringförmigen Kugelabschnitts.
Fig. 3 im Schnitt einen Turboverdichter eines Abgasturboladers für eine Brennkraftmaschine in Seitenansicht und
Fig. 4 den Turboverdichter von Fig. 3 in Draufsicht auf das Verdichterrad.

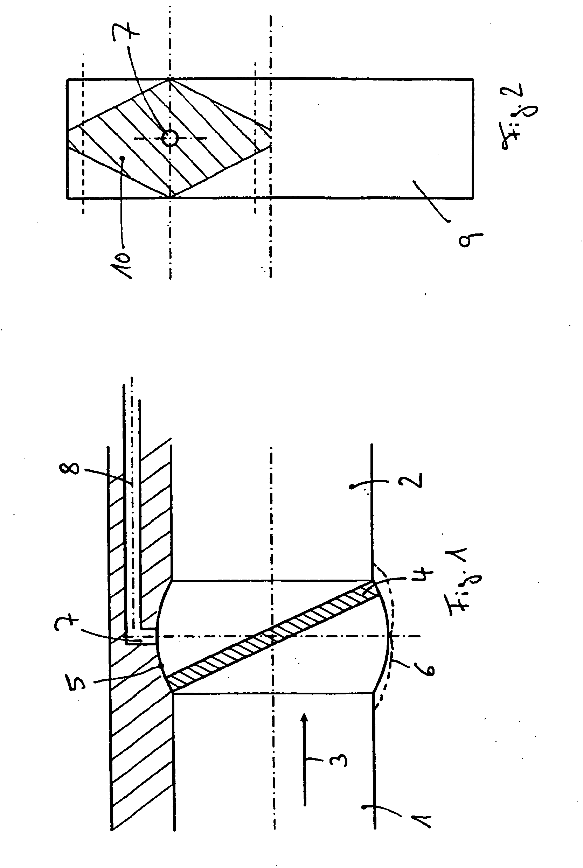

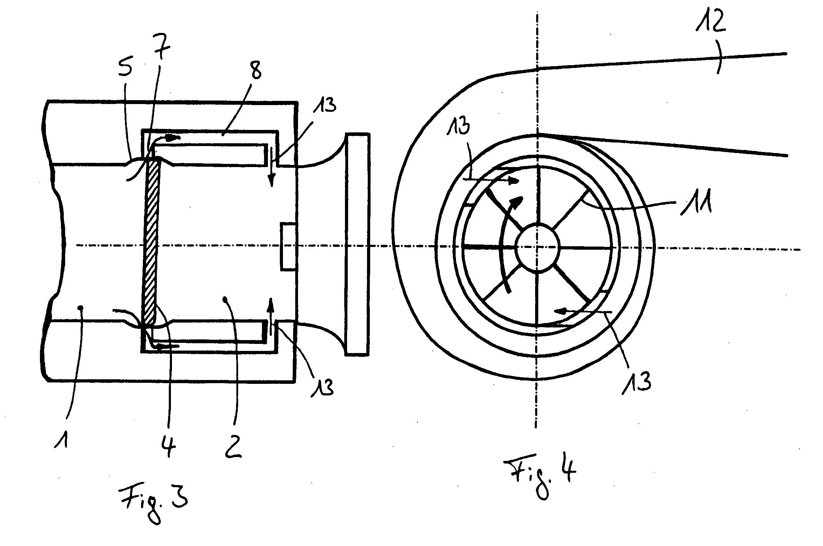

In den Fig. 1 und 2 ist, soweit im Einzelnen dargestellt, mit 1 ein Luftsammelkanal bezeichnet, an den sich ein mit 2 bezeichneter Haupteinlasskanal anschließt, der zu einem Verdichterrad 11 (Fig. 3 und Fig. 4) führt. Der mit 3 bezeichnete Pfeil zeigt die Strömungsrichtung der Verbrennungsluft an. Im Übergangsbereich zwischen dem Luftsammelkanal 1 und dem Haupteinlasskanal 2 ist eine mit 4 bezeichnete Drosselklappe vorgesehen. Die Drosselklappe 4 kann in beliebiger Weise angesteuert werden und eine mechanische aber auch eine elektrische Drehverstellung aufweisen. Die radiale Erstreckung der Drosselklappe 4 ist größer als der Innenquerschnitt des Luftsammelkanals 1 und/oder des Haupteinlasskanals 2. Die Kanäle weisen in ihrem Übergangsbereich einen ringförmigen Kugelabschnitt 5 auf, der gemäß der durchgezogenen Linie um die Drosselklappe 4 angeordnet und dieser angepasst ist. Der gesamte Kugelabschnitt 5 oder auch Teile des Kugelabschnitts 5 können derart zur Drosselklappe 4 verschoben sein, dass der Mittelpunkt des Kugelabschnitts 5 oder eines Teils des Kugelabschnitts 5 versetzt zur Drehachse der Drosselklappe 4 angeordnet ist. Auf der unteren Hälfte der Kanäle in Fig. 1 ist dieses durch gestrichelte Linien 6 dargestellt. Dadurch wird erreicht, dass bereits eine teilweise Öffnung des Haupteinlasskanals 2 erfolgt, wenn die Drosselklappe 4 aus ihrer Mittelstellung heraus bewegt wird.

Radial zur Mittelstellung der Drosselklappe 4 ist im Kugelabschnitt 5 eine Öffnung 7 vorgesehen, die zu einem mit 8 bezeichneten Zusatzkanal führt, durch den ein tangential auf das Verdichterrad 11 treffender Luftstrom geleitet werden kann (Fig. 3 und Fig. 4). Das Verdichterrad 11 deckt einen Luftauslass 12 in Form einer Schnecke ab, die sich in Richtung zu einer stromabwärtigen Drosselklappe der Brennkraftmaschine diffusorartig erweitert. Durch den Zusatzkanal 8 entsteht ein axialer und ein tangentialer Teilstrom (in Bezug auf das Verdichterrad 11 gesehen), deren Verhältnis durch die Drosselklappe 4 gesteuert wird. Infolge des Ausströmens der angesaugten Luft aus dem Zusatzkanal 8 und/oder den weiteren Zusatzkanälen wird dieser ein entsprechender Drall verliehen, wie durch die Pfeile 13 in der Fig. 4 angedeutet ist. In dem in Fig. 3 und 4 gezeigten Ausführungsbeispiel sind zwei Zusatzkanäle 8 vorgesehen. An der Mündung der Zusatzkanäle 8 auf das Verdichterrad 11 kann eine Dralleinrichtung vorgesehen sein. Durchmesser und Länge der Zusatzkanäle werden zweckmäßigerweise derart aufeinander abgestimmt, dass sich eine maximale Drallwirkung ergibt.

Es sei ausdrücklich darauf hingewiesen, dass über den Umfang des Kugelabschnitts verteilt mehrere Öffnungen 7 vorgesehen sein können, die von der Drosselklappe 4 zu dem Zusatzkanal 8 bzw. den Zusatzkanälen führen, wobei letztere auch als Ringkanal ausgeführt sein können. Da die Öffnungen 7 auch nacheinander über die Drosselklappe 4 geöffnet werden können, ist jedem Zusatzkanal 8 eine Öffnung und damit eine eigene Drosseleinrichtung zum Einstellen des relativen Massestroms zugeordnet, und nur eine Drosselklappe 4 vorgesehen. Über die Drosselklappe 4 ist der Luftstrom beispielsweise auch ganz absperrbar.

Weiterhin sei darauf hingewiesen, dass die Öffnung 7 oder mehrere Öffnungen auch in Schwenkrichtung der Drosselklappe 4 im Kugelabschnitt 5 versetzt angeordnet sein können, so dass in der Mittelstellung die Öffnung 7 durch die Drosselklappe 4 verdeckt ist, dass aber dann weitere Öffnungen an anderen Stellen des Kugelabschnitts 5 geöffnet sind. Diese zusätzlichen Öffnungen und weitere nicht dargestellte Öffnungen an der Wand des Luftsammelkanals 1 oder des Haupteinlasskanals 2 können mit einem ebenfalls nicht dargestellten Zusatzzweitkanal in Verbindung stehen, der getrennt oder gemeinsam mit dem Zusatzkanal 8 zum Verdichterrad 11 führt, wobei an der Mündung des Zusatzkanals 8 und/oder des Zusatzzweitkanals eine Dralleinrichtung angeschlossen sein kann, die mit dem Verdichterrad 11 in Wirkverbindung steht, wobei die Dralleinrichtung bezüglich des Strömungsquerschnitts und/oder der Abströmrichtung verstellbar ausgebildet sein kann.

In Fig. 2 ist mit 9 eine Abwicklung bezeichnet, die dem ringförmigen Kugelabschnitt 5 gemäß den durchgezogenen Linien in Fig. 1 entspricht. Weiterhin ist in Fig. 2 mit 10 eine rautenartige Fläche innerhalb der Abwicklung 9 bezeichnet, die der nutzbaren Fläche für die Anbringung von durch die Drosselklappe 4 beeinflussbare Öffnungen an einer Seite der Kanäle entspricht, wobei nur die eine Öffnung 7 gemäß Fig. 1 eingezeichnet ist. Die nutzbare Fläche kann sich ändern, wenn andere Kugelabschnitte, beispielsweise gemäß den gestrichelten Linien 6, vorgesehen sind. Es sei darauf hingewiesen, dass die Innenkontur des Haupteinlasskanals 2 nur in dem Bereich, in dem die Drosselklappe 4 mit der Innenkontur des Kugelabschnitts 5 dichten muss, kugelabschnittsförmig ist. Ansonsten kann die Innenkontur beliebig sein, insbesondere auch so gestaltet, dass die Aufteilung des Massestroms auf Haupteinlasskanal 2 und Zusatzkanal 8 bzw. Zusatzkanäle über die Verschwenkung der Drosselklappe 4 einen gewünschten Verlauf hat, insbesondere gut einstellbar ist. Auch auf der gegenüberliegenden Seite der Kanäle (untere Hälfte von Fig. 1) ergibt sich eine entsprechende rautenförmige Fläche, die in der unteren Hälfte von Figur 2 liegt, dort aber nicht eingezeichnet ist. Insbesondere dann, wenn der Zusatzkanal 8 als Ringkanal ausgebildet ist, ergibt sich die Möglichkeit, auch dort eine oder mehrere Öffnungen vorzusehen.

## Patentansprüche

1. Turboverdichter für eine Brennkraftmaschine, insbesondere Verdichter für einen Turbolader, mit einem Luftsammelkanal (1) für zu verdichtende Verbrennungsluft, an den sich ein Haupteinlasskanal (2), zumindest ein Zusatzkanal (8) und ein drehbar gelagertes Verdichterrad (11) anschließen, und mit einem verstellbaren Absprerrorgan zur Veränderung der Strömungsquerschnitte im Haupteinlasskanal (2) und im Zusatzkanal (8), **dadurch gekennzeichnet, dass** das Absperrorgan am Übergang vom Luftsammelkanal (1) zum Haupteinlasskanal (2) und zum Zusatzkanal (8) angeordnet ist, und dass das Absperrorgan den Strömungsquerschnitt des Haupteinlasskanals (2) und den Strömungsquerschnitt des zumindest einen Zusatzkanals (8) in Strömungsrichtung gesehen jeweils ausschließlich am Einlass der Kanäle (2, 8) steuert.

2. Turboverdichter nach Anspruch 1, **dadurch gekennzeichnet, dass** das Absperrorgan eine Drosselklappe (4) ist, die zusätzlich zur Veränderung der Hauptströmung den Strömungsquerschnitt zum Zusatzkanal (8) mittels ihrer Umfangserstreckung steuert.

3. Turboverdichter nach einem der Ansprüche 1 oder 2, **dadurch gekennzeichnet, dass** die radiale Erstreckung der Drosselklappe (4) zumindest quer zu ihrer Drehachse größer ist als der Querschnitt des Luftsammel- (1) und/oder des Haupteinlasskanals (2), und dass der Luftsammel- (1) und/oder der Haupteinlasskanal (2) einen vorzugsweise ringförmigen Kugelabschnitt (5) bilden.

4. Turboverdichter nach Anspruch 3, **dadurch gekennzeichnet, dass** der Mittelpunkt des Kugelabschnitts (5) oder Teile des Kugelabschnitts (5) zur Drehachse der Drosselklappe (4) versetzt ist.

5. Turboverdichter nach einem der Ansprüche 3 oder 4, **dadurch gekennzeichnet, dass** in zumindest einem Teil des Kugelabschnitts (5) zumindest eine Öffnung (7) vorgesehen ist, die mit dem Zusatzkanal (8) in Verbindung steht.

6. Turboverdichter nach Anspruch 5, **dadurch gekennzeichnet, dass** die Breite der Drosselklappe (4) in Richtung der Strömung im Wesentlichen der Abmessung der Öffnung (7) am Kugelabschnitt (5) in Richtung der Drosselklappenbreite entspricht.

7. Turboverdichter nach einem der vorhergehenden Ansprüche, **dadurch gekennzeichnet, dass** der Zusatzkanal (8) an dem dem Verdichterrad (11) zugewandten Ende eine Dralleinrichtung aufweist, deren Strömungsquerschnitt und/oder Abströmrichtung vorzugsweise verstellbar sind.

8. Turboverdichter nach einem der vorhergehenden Ansprüche, **dadurch gekennzeichnet, dass** zusätzlich zum Zusatzkanal (8) ein Zusatzzweitkanal vorgesehen ist, der vorzugsweise unabhängig vom Absperrorgan mit dem Luftsammel- (1) und/oder dem Haupteinlasskanal (2) einerseits und mit dem Verdichterrad (11) andererseits verbunden ist.

9. Turboverdichter nach Anspruch 8, **dadurch gekennzeichnet, dass** der Zusatzzweitkanal an seinem dem Verdichterrad (11) benachbarten Ende eine Dralleinrichtung aufweist, und dass vorzugsweise der Strömungsquerschnitt und/oder die Abströmrichtung dieser Dralleinrichtung verstellbar sind.

10. Turboverdichter nach einem der vorhergehenden Ansprüche 8 oder 9, **dadurch gekennzeichnet, dass** der Zusatzkanal (8) und/oder der Zusatzzweitkanal als Ringkanal ausgebildet sind, der den Haupteinlasskanal (2) umschließt.

11. Turboverdichter nach Anspruch 10, **dadurch gekennzeichnet, dass** die Außenwand des Ringkanals als Hülse ausgebildet ist, die sich zumindest in Strömungsrichtung vor der Öffnung (7) am Luftsammel- (1) und/oder Haupteinlasskanal (2) abstützt.

## Claims

1. Turbo-compressor for an internal combustion engine, especially a compressor for a turbocharger, with an air collector channel (1) for the to be compressed combustion air, which is followed by a main inlet channel (2), at least one additional channel (8) and a rotatably supported compressor impeller (11), and with an adjustable shutoff element for changing the flow cross-sections in the main inlet channel (2) and in the additional channel (8),
**characterised in**
**that** the shutoff element is arranged in the transition from the air collector channel (1) to the main inlet channel (2) and to the additional channel (8), and that the shutoff element controls the flow cross-section of the main inlet channel (2) and the flow cross-section of the at least one additional channel (8), when seen in flow direction, respectively, only at the inlet of the channels (2, 8).

2. Turbo-compressor according to claim 1, **characterised in that** the shutoff element is a throttle (4), which additionally controls for changing the main flow, the flow cross-section to the additional channel (8) by means of its circumferential extension.

3. Turbo-compressor according to one of claims 1 or 2, **characterised in that** the radial extension of the throttle (4) is, at least in transversal direction to its axis of rotation, larger than the cross-section of the air collector channel (1) and/or of the main inlet channel (2) and that the air collector channel (1) and/or the main inlet channel (2) form a preferably annular ball portion (5).

4. Turbo-compressor according to claim 3, **characterised in that** the centre point of the ball portion (5) or parts of the ball portion (5) are off-set to the axis of rotation of the throttle (4).

5. Turbo-compressor according to one of claims 3 or 4, **characterised in that** at least in a part of the ball portion (5), at least one opening (7) is provided, which is connected to the additional channel (8).

6. Turbo-compressor according to claim 5, **characterised in that** the width of the throttle (4) in the direction of the flow corresponds essentially to the dimension of the opening (7) at the ball portion (5) in direction of the throttle width.

7. Turbo-compressor according to one of the preceding claims, **characterised in that** the additional channel (8) has at the end, facing the compressor impeller (11), a swirl device, which flow cross-section and/or forward flow direction are, preferably, adjustable.

8. Turbo-compressor according to one of the preceding claims, **characterised in that** additionally to the additional channel (8) a secondary additional channel is provided, which is preferably connected independently of the shutoff element to the air collector channel (1) and/or the main inlet channel (2) and to the compressor impeller (11).

9. Turbo-compressor according to claim 8, **characterised in that** the secondary additional channel has at its end, neighbouring the compressor impeller (11), a swirl device, and that the flow cross-section and/or the forward flow direction of this swirl device are, preferably, adjustable.

10. Turbo-compressor according to one of the preceding claims 8 or 9, **characterised in that** the additional channel (8) and/or the secondary additional channel are formed as an annular channel, which encloses the main inlet channel (2).

11. Turbo-compressor according to claim 10, **characterised in that** the outer wall of the annular channel is formed as a sleeve, which is supported at least in flow direction in front of the opening (7) on the air collector channel (1) and/or the main inlet channel (2).

## Revendications

1. Turbocompresseur pour un moteur à combustion interne, en particulier compresseur pour un turbocompresseur à suralimentation, comprenant un canal collecteur d'air (1) pour l'air de combustion à comprimer, auquel se raccordent un canal d'entrée principal (2), au moins un canal supplémentaire (8) et une roue de compresseur (11) montée en rotation, et un organe d'arrêt réglable pour la variation des sections d'écoulement dans le canal d'entrée principal (2) et dans le canal supplémentaire (8), **caractérisé en ce que** l'organe d'arrêt est disposé sur le passage du canal collecteur d'air (1) au canal d'entrée principal (2) et au canal supplémentaire (8), et **en ce que** l'organe d'arrêt commande la section d'écoulement du canal d'entrée principal (2) et la section d'écoulement du au moins un canal supplémentaire (8) vu dans le sens d'écoulement, à chaque fois uniquement sur l'entrée des canaux (2, 8).

2. Turbocompresseur selon la revendication 1, **caractérisé en ce que** l'organe d'arrêt est un clapet d'étranglement (4) qui, en supplément de la variation de l'écoulement principal, commande la section d'écoulement allant au canal supplémentaire (8) au moyen de son extension périphérique.

3. Turbocompresseur selon l'une quelconque des revendications 1 ou 2, **caractérisé en ce que** l'extension radiale du clapet d'étranglement (4) est supérieure, au moins transversalement à son axe de rotation, à la section du canal collecteur d'air (1) et/ou du canal d'entrée principal (2), et **en ce que** le canal collecteur d'air (1) et/ou le canal d'entrée principal (2) forment un tronçon sphérique (5) de préférence de forme annulaire.

4. Turbocompresseur selon la revendication 3, **caractérisé en ce que** le centre du tronçon sphérique (5) ou des parties du tronçon sphérique (5) sont décalés par rapport à l'axe de rotation du clapet d'étranglement (4).

5. Turbocompresseur selon l'une quelconque des revendications 3 ou 4, **caractérisé en ce qu'**une ouverture (7), qui est en liaison avec le canal supplémentaire (8), est prévue dans au moins une partie du tronçon sphérique (5).

6. Turbocompresseur selon la revendication 5, **caractérisé en ce que** la largeur du clapet d'étranglement (4) en direction d'écoulement correspond sensiblement à la dimension de l'ouverture (7) sur le tronçon sphérique (5) en direction de la largeur du clapet d'étranglement.

7. Turbocompresseur selon l'une quelconque des revendications précédentes, **caractérisé en ce que** le canal supplémentaire (8) présente sur l'extrémité tournée vers la roue du compresseur (11) un dispositif de torsion dont la section d'écoulement et/ou le sens d'écoulement de sortie sont de préférence réglables.

8. Turbocompresseur selon l'une quelconque des revendications précédentes, **caractérisé en ce que**, en supplément du canal supplémentaire (8), il est prévu un second canal supplémentaire qui est relié de préférence indépendamment de l'organe d'arrêt au canal collecteur d'air (1) et/ou au canal d'entrée principal (2) d'une part et à la roue de compresseur (11) d'autre part.

9. Turbocompresseur selon la revendication 8, **caractérisé en ce que** le second canal supplémentaire présente un dispositif de torsion sur son extrémité voisine de la roue de compresseur (11) et **en ce que** de préférence la section d'écoulement et/ou le sens d'écoulement de sortie de ce dispositif de torsion sont réglables.

10. Turbocompresseur selon l'une quelconque des revendications 8 ou 9, **caractérisé en ce que** le canal supplémentaire (8) et/ou le second canal supplémentaire sont conçus comme canal annulaire qui entoure le canal d'entrée principal (2).

11. Turbocompresseur selon la revendication 10, **caractérisé en ce que** la paroi extérieur du canal annulaire est conçue sous forme de douille qui s'appuie au moins dans le sens d'écoulement en amont de l'ouverture (7) sur le canal collecteur d'air (1) et/ou le canal d'entrée principal (2).
